# EUROPÄISCHE PATENTSCHRIFT

(11) **EP 2 301 200 B1**
(45) Veröffentlichungstag und Bekanntmachung des Hinweises auf die Patenterteilung: **08.06.2016**
(21) Anmeldenummer: 09769360.0
(22) Anmeldetag: 26.06.2009
(51) Int. Cl.: H04L 12/24, H04L 12/26, H04L 12/40, H04L 29/14

(54) **VERFAHREN ZUM ERKENNEN EINES FEHLERHAFTEN KNOTENS**
METHOD FOR DETECTING A FAULTY NODE
PROCÉDÉ POUR RECONNAÎTRE UN NOEUD DÉFECTUEUX

(30) Priorität: 27.06.2008 DE 102008002738; 27.06.2008 US 133265 P
(43) Veröffentlichungstag der Anmeldung: 30.03.2011
(73) Patentinhaber: Airbus Operations GmbH, 21129 Hamburg (DE)
(72) Erfinder: BRUNNBERG, Holger, 22763 Hamburg (DE); OBERMAIER, Martin, 22609 Hamburg (DE); KRAKOWSKI, Dariusz, 21614 Buxtehude (DE)
(74) Vertreter: Isarpatent
(86) Internationale Anmeldenummer: PCT/EP2009/058057
(87) Internationale Veröffentlichungsnummer: WO 2009/156512

(56) Entgegenhaltungen:
- EP-A1- 2 079 190
- DE-A1- 3 928 537
- DE-A1- 10 131 135
- Peter Bagschik: "An Introduction to CAN" 8. Februar 2000 (2000-02-08), XP002541116 Gefunden im Internet: URL:http://www.port.de/pdf/CAN_Indroductio n_I+ME.pdf> [gefunden am 2009-08-12]

## Beschreibung

Die vorliegende Erfindung betrifft ein Verfahren zum Erkennen eines fehlerhaften Knotens, der an einen Bus angeschlossen ist, und insbesondere ein Verfahren zum Erkennen eines fehlerhaften Knotens, der an einen CAN-Bus angeschlossen ist.

Die DE 39 28 537 A1 beschreibt ein Verfahren zur Fehlererkennung oder Fehlerlokalisation bei Datenübertragungen. Dabei wird ein fehlerhafter Knoten erkannt, der an ein Bus angeschlossen ist. Beim Erkennen eines Fehlers wird in einem normalen Betriebszustand ein interner Fehlerzähler inkrementiert. Der Knoten schaltet in einen isolierten Betriebszustand, in welchem der Knoten keine Nachrichten über den Bus austauscht, wenn der Fehlerzähler des Knotens einen vorgegebenen Fehlerschwellenwert überschreitet. Beim Erfüllen einer Bedingung schaltet der Knoten von dem isolierten Betriebszustand in den normalen Betriebszustand.

Die DE 10 2007 004 701 beschreibt ein Verfahren zum Betreiben eines Mischers einer Heizungsanlage bei dem ein Zustandswechsel ausgewertet wird.

Knoten bzw. Teilnehmer eines CAN-Buses (CAN: Controller Area Network) kommunizieren miteinander entsprechend einem CAN-Bus-Protokoll. Der CAN-Bus ist ein asynchrones, serielles Bussystem zur Vernetzung von Steuergeräten. Die Anzahl der angeschlossenen Teilnehmer bzw. Knoten hängt von den verwendeten Bustreiberbausteinen ab.

Der CAN-Bus ist multimasterfähig, d.h. jeder einzelne Knoten des Bussystems ist in der Lage, eine Kommunikation einzuleiten. Der CAN-Bus bedient sich der Zugriffstechnik CSMA/CD+CR (Carrier Sense, Multiple Access/Collision Detection + Collision Resolution). Der Buszugriff wird mittels einer Arbitrierung auf Basis auf Identifizieren der über den Bus übertragenen Nachrichten durchgeführt. Die Kommunikation zwischen den Knoten erfolgt mit Nachrichten bzw. Telegrammen, die auch als Frames bezeichnet werden. Bei einem CAN-Bus können vier verschiedene Arten von Frames bzw. Nachrichten übertragen werden. Neben Daten-Nachrichten zum Transport von Nachrichten unterscheidet man auch sogenannte Remote-Frames, Overload-Frames und Error-Frames. Ein Remote-Frame bzw. eine Remote-Nachricht dient zur Anforderung eines Daten-Frames von einem anderen Teilnehmer bzw. Knoten. Ein Overload-Frame dient als Zwangspause zwischen einem Daten- und einem Remoteframe. Ein Error-Frame signalisiert einen Knoten eines erkannten Fehlers bei der Datenübertragung.

Ein Knoten bzw. ein CAN-Controller ist in der Lage, Fehler während der Übertragung zu erkennen. Beispielsweise können Bitfehler, Bit-Stuffing-Fehler, CRC-Fehler, Format-Fehler in einem Telegramm und Acknowledgement-Fehler festgestellt werden. Wird einer dieser Fehler von einem Knoten erkannt, benachrichtigt der Knoten die übrigen Knoten des Bussystems und den Absender des Telegramms bzw. der Nachricht indem der Knoten einen Error-Frame sendet. Nach Empfang eines Error-Frames werten alle Teilnehmer bzw. Knoten die empfangene Nachricht aus und beginnen ebenfalls einen Error-Frame zu senden.

Fehlerhafte Nachrichten können durch externe Störquellen außerhalb des Bussystems oder durch Fehlfunktion eines CAN-Teilnehmers hervorgerufen werden. Um sicherzustellen, dass durch einen defekten Knoten, der nicht in der Lage ist Nachrichten richtig zu empfangen, das gesamte Netzwerk bzw. das gesamte Bussystem blockiert wird, ist in jedem Knoten bzw. jedem CAN-Controller des Bussystems ein Algorithmus implementiert mit dessen Hilfe sich der Knoten im Fehlerfall schrittweise von dem Busgeschehen zurückzieht. Stellt ein CAN-Controller bzw. ein Knoten fest, dass er als erster Netzteilnehmer bzw. Knoten einen Error-Frame gesendet hat, erhöht er einen internen Fehlerzähler TEC (Transmit Error Counter). Solange der Wert des Fehlerzählers unter einem Schwellenwert liegt, sendet der CAN-Controller im Fehlerfall Error-Frames. Der Schwellenwert für den Fehlerzähler liegt beispielsweise bei 127. Dieser Betriebsmodus stellt den normalen Betriebszustand des Knotens dar und wird auch als Error-Active-Betriebszustand bezeichnet. Liegt der Wert des Fehlerzähler TEC über den Schwellenwert von 127, geht der CAN-Controller in einen sogenannten Error-Passiv-Betriebsmodus über. In diesem Betriebsmodus sendet der CAN-Controller einen 6-Bit-Error-Frame mit einem rezessiven Signalpegel aus. Wenn der Fehlerzähler TEC einen Stand von 255 erreicht hat, wird der CAN-Controller in den sogenannten Bus-off-Betriebszustand geschaltet und nimmt nicht mehr an der Kommunikation über den CAN-Bus teil. In dem Bus-off-Betriebsmodus befindet sich der Knoten in einem isolierten Betriebszustand, in welchem der Knoten keine Nachrichten über den Bus austauscht. Aus dem Error-Passiv-Modus kann sich der CAN-Controller selbst befreien, da der Fehlerzähler dekrementiert wird, wenn ein anderer Teilnehmer bzw. Knoten einen Fehler zuerst erkannt hat.

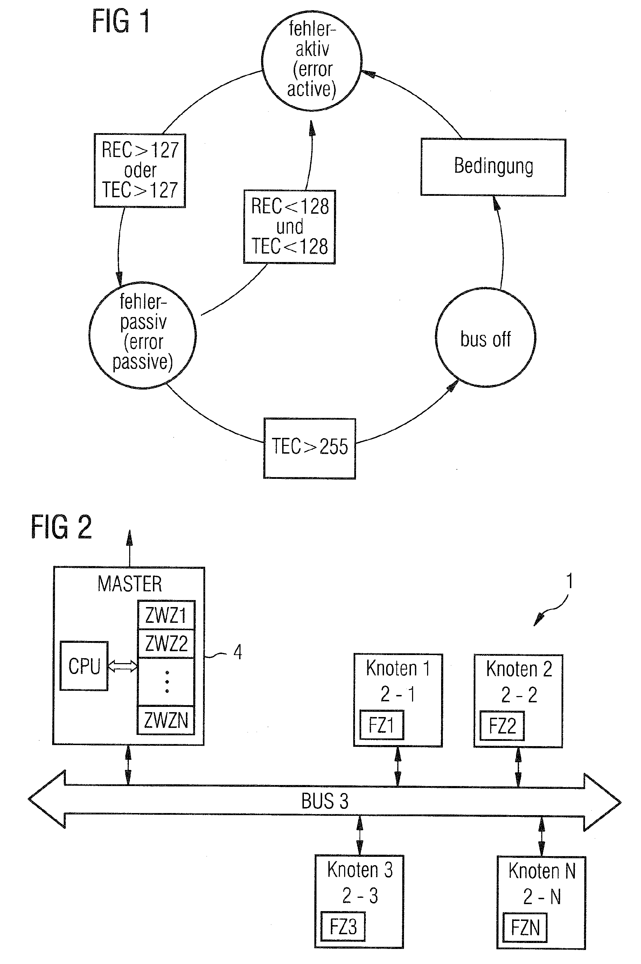

Fig. 1 zeigt ein Zustandsdiagramm zur Darstellung einer Ausnahme- bzw. Fehlerbehandlung innerhalb eines herkömmlichen CAN-Controllers. Der CAN-Controller verfügt über zwei Zähler bzw. Counter, nämlich einen TEC-Zähler (TEC: Transmitting Error Counter) und einen REC-Zähler (REC: Receiving Error Counter). Der CAN-Knoten übermittelt und empfängt Nachrichten bzw. Telegramme, die der Knoten auf ihre Richtigkeit überprüft. Im Falle eines Fehlers in einer übermittelten Nachricht zählt der interne Zähler TEC die Anzahl der erkannten Fehler mit, so dass der Knoten der in Fig. 1 dargestellten Zustände einnehmen kann. Befindet sich der Knoten in dem isolierten Betriebszustand (Bus-off), so nimmt der Knoten solange nicht an der Kommunikation teil, bis eine Bedingung für den Übergang in den normalen Betriegszustand (Error Active) erfüllt ist. Die Bedingung besteht beispielsweise in einem Auftreten aufeinanderfolgender rezessiver Bits auf den Datenbus.
Die in Fig. 1 dargestellte Fehlerbehandlung des CAN-Bus-Datenübertragungsprotokolls (Error Handling) stellt sicher, dass ein Minimum an Kommunikation stattfinden kann. Die Fehlerbehandlung sichert die Kommunikation eines funktionierenden CAN-Buses mit einem oder mehreren fehlerhaften Knoten.

Die in Fig. 1 dargestellte Fehlerbehandlung nach dem Stand der Technik weist jedoch einige Nachteile auf. Wie man aus Fig. 1 erkennen kann, kann ein fehlerhafter Knoten bzw. ein fehlerhafter Teilnehmer des Bussystems über einen längeren Zeitraum die Kommunikation über den Bus stören, ohne, dass sein Fehlverhalten aufgezeichnet oder angezeigt wird. Bei der herkömmlichen Fehlerbehandlung erfolgt weder eine Auswertung der Fehlerhäufigkeit, noch eine qualitative Bewertung des auftretenden Fehlers mit dessen möglichen Konsequenzen. Ein dauerhaft fehlerhafter Knoten kann die drei in Fig. 1 dargestellten Betriebszustände durchlaufen, ohne dass sein fehlerhaftes Verhalten rechtzeitig erkannt wird. Da für ein ständig fehlerhafter CAN-Bus-Knoten keine Fehlerauswertung durchgeführt wird, kann dieser Knoten auch nicht gezielt ausgetauscht werden. Da ein dauerhaft fehlerhafter CAN-Knoten nicht sofort erkannt werden kann, sind insbesondere bei sicherheitskritischen Anwendungen zusätzliche redundante Knoten vorgesehen. Befindet sich der CAN-Bus innerhalb eines Fahrzeugs erhöht sich durch die zusätzliche Anzahl von redundanten Knoten und somit das Gesamtgewicht des Fahrzeugs. Aufgrund des erhöhten Gesamtgewichts, erhöht sich der Kraftstoffverbrauch des Fahrzeugs. Ferner kann ein ständiges Fehlverhalten des CAN-Bus-Knotens zu einem Geräteausfall führen und die Verfügbarkeit des entsprechenden Bussystems vermindern.

Die DE 101 31 135 A1 offenbart ein Verfahren zum Betreiben eines Netzwerkknotens der in einem multimedialen digitalen Netzwerk eingebunden ist. Ein typisches digitales Ringnetzwerk 1 ist in Fig. 1 der DE 101 31 135 A1 dargestellt. In dieser Darstellung sind beispielhaft vier Netzwerkknoten dargestellt. An jeden Knoten ist ein entsprechendes Gerät angeschaltet. Die Knoten weisen jeweils einen Netzwerk-Transceiver auf. Die Geräte bedienen sich der Funktionen des Netzwerks über sogenannte Netzwerkservices, welche z. B. im jeweiligen Gerät enthalten sind. An diese Netzwerkservices sind dann ein oder mehrere Applikationen angeschaltet.

Liegt ein Fehler in einem oder mehreren Knoten vor oder bei einem generellen Funktionsfehler des gesamten Netzwerkes, so werden die zum Betrieb der Applikationen benötigten Funktionen nicht mehr bereitgestellt. Einzelne oder auch alle Geräte sind dann nicht mehr betriebsbereit. Der sogenannte Notlauf wird erst nach einer vorher definierten Zeit aktiviert. Dadurch erhält das System die Möglichkeit eventuelle korrigierbare Fehler noch zu berichtigen.

Der Netzwerkknoten übergibt wieder die Kontrolle der Notlauffunktionen an das Netzwerk sobald dieses oder der Knoten selbst wieder betriebsbereit sind. Es werden nur diejenigen Betriebsfunktionen emuliert, welche für den Betrieb einer Applikation notwendig sind. Dadurch verringert sich der jeweilige Aufwand innerhalb eines Knotens, der notwendig ist, die Notlauffunktionen bereitzustellen. Treten Fehler über einen längeren Zeitraum auf, so ist eine Zähleinrichtung vorgesehen, die bei jedem auftretenden Aktivieren der Notlauffunktion einen Zähler erhöht. Der Zählerstand wird dann abgefragt und mit einer vorbestimmbaren Schwelle verglichen. Wird diese überschritten, so wird eine Anzeige aktiviert, die dem Nutzer anzeigt, dass Servicearbeiten zur Behebung des Fehlers fällig werden.

Es ist daher eine Aufgabe der vorliegenden Erfindung, ein Verfahren zu schaffen, das einen fehlerhaften Knoten eines Busses rechtzeitig erkennt.

Diese Aufgabe wird erfindungsgemäß durch ein Verfahren mit den in dem Patentanspruch 1 angegebenen Merkmalen gelöst.

Die Erfindung schafft ein Verfahren zum Erkennen eines fehlerhaften Knotens, der an einen Bus eines Bussystems angeschlossen ist, wobei ein Master-Knoten mit dem Bus verbunden ist,wobei der Knoten in einem normalen Betriebszustand bei Erkennung eines Fehlers einen internen Fehlerzähler inkrementiert,wobei der Knoten in einen isolierten Betriebszustand schaltet, in welchem der Knoten keine Nachrichten über den Bus des Bussystems austauscht, wenn der interne Fehlerzähler des Knotens einen vorgegebenen Fehler-Schwellenwert überschreitet,wobei bei Erfüllung einer Bedingung der Knoten von dem isolierten Betriebszustand in den normalen Betriebszustand schaltet und dieser Zustandswechsel erfasst wird, wobei ein zu dem Knoten zugehöriger Zustandswechselzähler, der in dem Master-Knoten vorgesehen ist, inkrementiert wird, wenn ein Zustandswechsel des Knotens von dem isolierten Betriebszustand in den normalen Betriebszustand erfasst wird, und wobei der Knoten als fehlerhaft erkannt wird, wenn eine Rate der erfassten Zustandswechsel eine einstellbare Wechselrate oder eine Anzahl der erfassten Zustandswechsel einen einstellbaren Zustandswechsel-Schwellenwert überschreitet.

Bei einer Ausführungsform des erfindungsgemäßen Verfahrens wird ein Zustandswechselzähler inkrementiert, wenn ein Zustandwechsel von dem isolierten Betriebszustand in den normalen Betriebszustand erfasst wird.

Bei einer Ausführungsform des erfindungsgemäßen Verfahrens zeigt ein Knoten ein Zustandswechsel von dem isolierten Betriebszustand in dem normalen Betriebszustand mittels einer über den Bus gesendeten Nachricht oder über einen von dem Bus getrennten Kommunikationskanal dem Masterknoten an.
Bei einer Ausführungsform des erfindungsgemäßen Verfahrens sendet der Knoten bei Erkennen eines Fehlers bei der Übertragung einer Nachricht über den Bus eine Fehlernachricht über den Bus aus.

Die Erfindung schafft ferner einen Knoten für einen Bus eines Bussystems, wobei der Knoten einen internen Fehlerzähler aufweist, der in einem normalen Betriebszustand des Knotens bei Erkennung eines Fehlers inkrementiert wird,wobei der Knoten von dem normalen Betriebszustand in einen isolierten Betriebszustand schaltet, wenn der interne Fehlerzähler des Knotens einen vorgegebenen Fehler-Schwellenwert überschreitet,wobei bei Erfüllung einer Bedingung der Knoten von dem isolierten Betriebszustand zurück in den normalen Betriebszustand schaltet,wobei ein zu dem Knoten zugehöriger Zustandswechselzähler in einem über den Bus mit dem Knoten verbundenen Master-Knoten vorgesehen ist, der bei jedem Zustandswechsel des Knotens von dem isolierten Betriebszustand in den normalen Betriebszustand inkrementiert wird,wobei der Knoten als fehlerhaft erkannt wird, wenn der zugehörige Zustandswechselzähler einen einstellbaren Zustandswechsel-Schwellenwert überschreitet.

Bei einer Ausführungsform des erfindungsgemäßen Knotens ist der Knoten ein CAN-Knoten, der an einem CAN-Bus angeschlossen ist, welcher innerhalb eines Fahrzeugs verlegt ist.
Bei einer Ausführungsform des erfindungsgemäßen Knotens ist das Fahrzeug ein Luftfahrzeug.
Die Erfindung schafft ferner ein Computerprogrammprodukt mit Programmbefehlen zur Durchführung eines Verfahrens zum Erkennen eines fehlerhaften Knotens, der an einen Bus eines Bussystems angeschlossen ist, wobei ein Master-Knoten mit dem Bus verbunden ist,wobei der Knoten in einem normalen Betriebszustand bei Erkennung eines Fehlers einen internen Fehlerzähler inkrementiert,wobei der Knoten in einen isolierten Betriebszustand schaltet, in welchem der Knoten keine Nachrichten über den Bus des Bussystems austauscht, wenn der interne Fehlerzähler des Knotens einen vorgegebenen Fehler-Schwellenwert überschreitet,wobei bei Erfüllung einer Bedingung der Knoten von dem isolierten Betriebszustand in den normalen Betriebszustand schaltet und dieser Zustandswechsel erfasst wird, wobei ein zu dem Knoten zugehöriger Zustandswechselzähler, der in dem Master-Knoten vorgesehen ist, inkrementiert wird, wenn ein Zustandswechsel des Knotens von dem isolierten Betriebszustand in den normalen Betriebszustand erfasst wird, und wobei der Knoten als fehlerhaft erkannt wird, wenn eine Rate der erfassten Zustandswechsel eine einstellbare Wechselrate oder eine Anzahl der erfassten Zustandswechsel einen einstellbaren Zustandswechsel-Schwellenwert überschreitet.

Die Erfindung schafft ferner einen Datenträger, der ein derartiges Computerprogrammprodukt speichert.
Im Weiteren werden bevorzugte Ausführungsformen des erfindungsgemäßen Verfahrens und des erfindungsgemäßen Busknotens unter Bezugnahme auf die beigefügten Figuren zur Erläuterung erfindungswesentlicher Merkmale beschrieben.

Es zeigen:
- Fig. 1: ein Zustandsdiagramm zur Darstellung einer Fehlerbehandlung bei einem CAN-Bus nach dem Stand der Technik;
- Fig. 2: ein Blockdiagramm zur Darstellung einer Fehlerbehandlung bei einer ersten Ausführungsform des erfindungsgemäßen Verfahrens zum Erkennen eines fehlerhaften Knotens;
- Fig. 3: zeigt ein Blockdiagramm zur Darstellung einer Fehlerbehandlung bei einer weiteren Ausführungsform des erfindungsgemäßen Verfahrens zum Erkennen eines fehlerhaften Knotens;
- Fig. 4: zeigt ein Blockdiagramm zur Darstellung einer Fehlerbehandlung bei einer weiteren Ausführungsform des erfindungsgemäßen Verfahrens zum Erkennen eines fehlerhaften Knotens;
- Fig. 5: ein Zustandsdiagramm zur Darstellung des erfindungsgemäßen Verfahrens.

Fig. 2 zeigt ein Bussystem 1 gemäß einer ersten Ausführungsform der Erfindung. Mehrere Knoten 2-1, 2-1, 2-3...2n sind an einen gemeinsamen Bus 3 angeschlossen. Darüber hinaus ist mindestens ein Master-Knoten 4 mit dem Bus 3 verbunden. Bei dem Bus 3 kann es sich beispielsweise um einen Feldbus, insbesondere um einen CAN-Bus handeln. Die Knoten 2-i werden beispielsweise durch CAN-Controller gebildet. Diese CAN-Controller können in beliebigen Geräten integriert sein.

Wie man in Fig. 2 erkennen kann, weist jeder Knoten einen internen Fehlerzähler FZ auf. In einem normalen Betriebszustand des Knotens 2 wird der zugehörige interne Fehlerzähler FZ des Knotens bei Erkennung eines Fehlers inkrementiert. Die Fehlererkennung kann auf verschiedenen Ebenen erfolgen. Auf Nachrichtenebenen ist beispielsweise eine Fehlererkennung mittels einer in der Nachricht übertragenen CRC-Prüfsumme (CRC: Cycle Redundancy Check) implementiert. Die Fehlererkennung kann auch auf der physikalischen Übertragungsebene vorgesehen sein. Wird bei der Übertragung einer Nachricht über den Bus ein Fehler erkannt, sendet bei einer möglichen Ausführungsform der Knoten 2 eine Fehlernachricht (Error Frame) über den Bus 3 aus und inkrementiert den integrierten Fehlerzähler FZ.

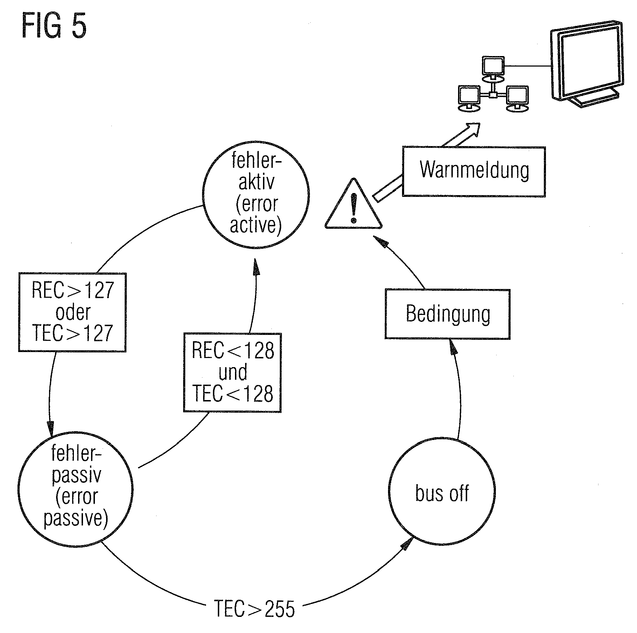

Überschreitet der integrierte Fehlerzähler FZ des Knotens 2 einen vorgegebenen Fehler-Schwellenwert, so schaltet der Knoten 2 in einen isolierten Betriebszustand (Bus-off), in welchem der Knoten 2 keine Nachrichten über den Bus 3 mit anderen Knoten austauscht, wie in Fig. 5 dargestellt. Bei einer möglichen Ausführungsform ist der Fehler-Schwellenwert vorgegeben und beträgt beispielsweise bei einem CAN-Bus 255. Bei einer alternativen Ausführungsform ist der Fehler-Schwellenwert einstellbar. Dabei können die Schwellenwerte für die verschiedenen Knoten je nach Anwendung gleich oder unterschiedlich eingestellt werden. Bei einer weiteren Ausführungsform werden die Schwellenwerte für die Fehlerzähler FZ der verschiedenen Knoten 2 von dem Master-Knoten 4 über den Bus 2 eingestellt, indem eine entsprechende Nachricht von dem Mater-Knoten 4 an den jeweiligen Knoten 2 übertragen wird. Bei einer weiteren Ausführungsform ist der Schwellenwert für den Fehlerzähler FZ jeweils über ein Interface an dem Knoten 2 direkt einstellbar.

Nach Überschreiten des Fehler-Schwellenwertes nimmt der jeweilige Knoten 2 nicht mehr an der Kommunikation teil und befindet sich in einem isolierten Betriebszustand. Ein Knoten 2, der sich in dem isolierten Betriebszustand (bus-off) befindet, nimmt solange nicht mehr an der Kommunikation teil, bis eine Bedingung für den Übergang bzw. den Zustandswechsel von dem isolierten Betriebszustand in den normalen Betriebszustand (Error Active) erfüllt wird. Dieser Zustandswechsel, bei dem der Knoten bzw. Teilnehmer von dem isolierten Betriebszustand zurück in den normalen Betriebszustand wechselt bzw. schaltet, wird bei dem erfindungsgemäßen Verfahren erfasst. Wenn ein fehlerhafter Knoten 2 immer wieder aus dem isolierten Betriebszustand zurück in einen normalen Betriebszustand kehrt, wird dies bei dem erfindungsgemäßen Verfahren erfasst. Dies kann auch durch weitere Knoten aufgenommen werden, sofern der verursachende Knoten 2 konstruktiv nicht in der Lage ist, diese Information anzuzeigen bzw. an weitere Knoten weiterzureichen.

Bei dem erfindungsgemäßen Verfahren wird ein Knoten 2 als fehlerhaft erkannt, wenn eine Rate der erfassten Zustandswechsel eine einstellbare Wechselrate überschreitet. Bei einer alternativen Ausführungsform des erfindungsgemäßen Verfahrens wird ein Knoten 2 dann als fehlerhaft erkannt, wenn eine absolute Anzahl der erfassten Zustandswechsel einen einstellbaren Zustandswechsel-Schwellenwert überschreitet. Dazu wird bei einer Ausführungsform des erfindungsgemäßen Verfahrens für jeden zu überwachenden Knoten 2 ein zugehöriger Zustandswechselzähler ZWZ vorgesehen. Dieser Zustandswechselzähler ZWZ kann wie bei der in Fig. 2 dargestellten Ausführungsform beispielsweise in einem Master-Knoten 4 implementiert sein. Wie man aus Fig. 2 erkennen kann, enthält der Master-Knoten 4 mehrere Register bzw. Zählwerke, wobei für jeden der N zu überwachenden Knoten 2 des Bussystems 1 ein zugehöriger Zustandswechsel-Zähler ZWZ vorgesehen ist. Ein Zustandswechselzähler ZWZ eines Knotens 2 wird inkrementiert wenn ein Zustandswechsel des Knotens 2 von einem isolierten Betriebszustand in den normalen Betriebszustand erfasst wird. Die Zählwerte der Zustandswechselzähler ZWZ bzw. BOC-Counter (BOC:Bus-off-Counter) kann durch eine CPU bzw. einen Mikroprozessor innerhalb des Master-Knotens 4 ausgelesen und ausgewertet werden. Dazu führt die CPU des Master-Knotens 4 bei einer möglichen Ausführungsform ein entsprechendes Fehlerbehandlungs-Computerprogramm aus. Bei einer möglichen Ausführungsform zeigt ein Knoten 2 einen Zustandswechsel von dem isolierten Betriebszustand in den normalen Betriebszustand mit einer über den Bus 3 gesendeten Nachricht dem Master-Knoten 4 an. Bei einer möglichen Ausführungsform wird dabei eine Nachricht entsprechend dem Bus-Nachrichtensignalübertragungsprotokoll benutzt. Handelt es sich bei dem Bus 3 beispielsweise um einen CAN-Bus kann der Knoten 2 den aufgetretenen Zustandswechsel mittels eines Bits bzw. eines Flags innerhalb einer CAN-Nachricht anzeigen. Ein normalerweise nicht gesetztes Bit innerhalb der Nachricht wird durch den Knoten 2 bei einem erfassten Zustandswechsel gesetzt und zeigt dem Master-Knoten 4 als Flag den aufgetreten Zustandswechsel in dem Knoten 2 an.

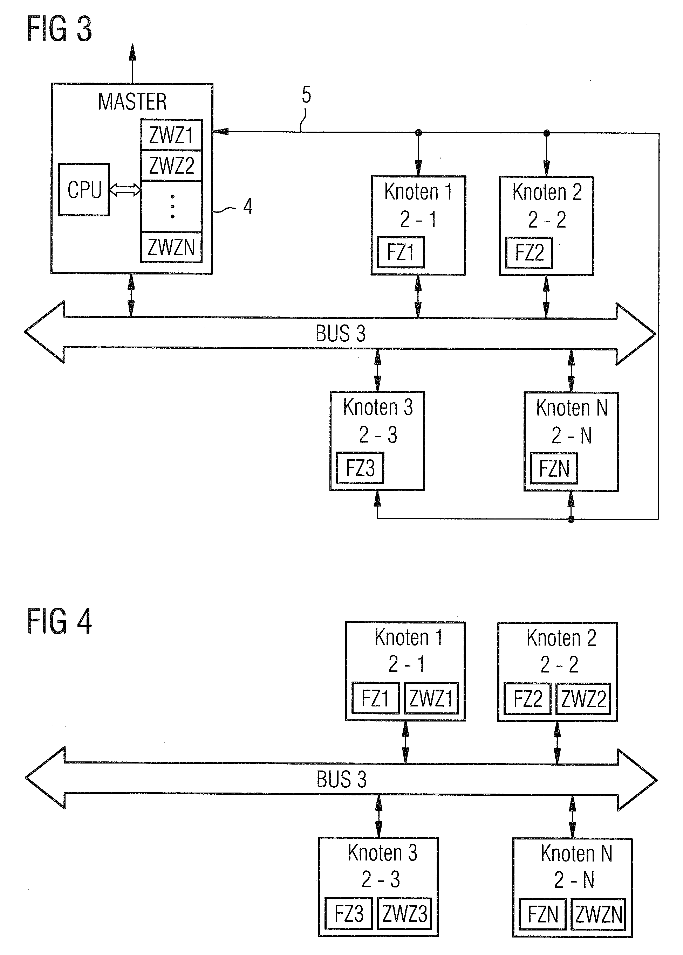

Bei einer alternativen Ausführungsform wird der Zustandwechsel nicht mittels einer über den Bus 3 gesendeten Nachricht angezeigt, sondern über einen getrennten Kommunikationskanal 5. Fig. 3 zeigt ein Ausführungsbeispiel, bei dem die Knoten 2 über eine von dem Bus 3 getrennten Kommunikationsverbindung 5 an den Masterknoten 4 angeschlossen sind. Die Knoten 2 sind in der Lage über eine von dem Bus 3 getrennt verlegte Steuerleitung 5 dem Master-Knoten 4 anzuzeigen, dass bei ihnen ein Zustandswechsel von dem isolierten Betriebszustand in den normalen Betriebszustand aufgetreten ist. Bei dem separaten Kommunikationskanal 5 kann es sich auch um einen weiteren Bus bzw. Feldbus handeln. Bei der in Fig. 3 dargestellten Ausführungsform ist der Kommunikationskanal 5 drahtgebunden. Bei einer alternativen Ausführungsform kann Kommunikationskanal 5 auch drahtlos implementiert sein. Dabei übertragen die Knoten 2 über eine drahtlose Schnittstelle eine Nachricht zu dem Masterknoten 4, die besagt, dass bei dem jeweiligen Knoten 2 ein Zustandswechsel aufgetreten ist. Bei der in Fig. 2 und 3 dargestellten Ausführungsformen sind die Zustandswechselzähler ZWZ in einem Masterknoten 4 implementiert und werden dort ausgewertet.

Bei der in Fig. 4 dargestellten Ausführungsform sind die Zustandswechselzähler ZWZ der verschiedenen Knoten 2 innerhalb der Knoten 2 implementiert. Ein Knoten 2 wird als fehlerhaft erkannt, wenn sein darin integrierter Zustandswechselzähler ZWZ einen einstellbaren Zustandswechselschwellenwert überschreitet. Erst bei Überschreiten dieses Zustandswechsel-Schwellenwertes sendet der Knoten 2 eine entsprechende Nachricht über den Bus 3 aus, um beispielsweise einen Nutzer über einen notwendigen Wartungsvorgang zu informieren wie in Fig. 5 gezeigt. Bei der in Fig. 4 dargestellten Ausführungsform sind alle Knoten 2 gleichberechtigt.

Bei der in Fig. 4 dargestellten Ausführungsform ist es auch möglich, dass die Knoten 2 das Überschreiten ihres Zustandwechsel-Schwellenwertes über einen getrennten Kommunikationskanal anzeigen, der von dem Bus 3 getrennt verlegt ist. Bei einer alternativen Ausführungsform melden die Knoten 2-i, das Überschreiten des darin integrierten Zustandwechselzählers ZWZ über eine drahtlose Schnittstelle. Das über den getrennten Kommunikationskanal 5 übertragene Signal kann digital, analog oder diskret sein. Bei einer möglichen Ausführungsform werden die verschiedenen auftretenden Zustandswechsel nicht nur gezählt, sondern für eine spätere Auswertung auch aufgezeichnet. Die Aufzeichnung kann durch Abspeichern der Zählwerte der Zustandswechselzähler ZWZ zu verschiedenen Zeitpunkten erfolgen. Bei einer möglichen Ausführungsform weisen die Knoten 2-i hierzu einen auslesbaren Speicher auf, in dem die Zustandswechsel-Zählwerte über die Zeit aufgezeichnet werden. Diese Aufzeichnungen kann bei einer möglichen Ausführungsform in einem entsprechenden Nachrichtenaustausch über den Bus 3 ausgelesen werden. Bei einer alternativen Ausführungsform erfolgt das Auslesen der Aufzeichnungen über eine separaten Kommunikationskanal. Bei einer weiteren Ausführungsform werden die Aufzeichnungen in einem lokalen Datenträger abgelegt, der aus dem Knoten 2 entfernbar ist.

Verschlechtert sich die Übertragungsqualität eines Knotens 2 aufgrund eines Fehlers, erhöht sich dessen Zustandswechselrate. Dadurch nimmt der Wert des zuständigen Zustandswechselzählers ZWZ des jeweiligen Knotens 2 zu. Überschreitet der Zustandwechselzählers ZWZ des Knotens 2 den konfigurierten Zustandswechselschwellenwert für diesen Knoten 2 kann beispielsweise der in Fig. 2 dargestellte Master-Knoten 4 einen Wartungshinweise bzw. eine Alarmmeldung abgeben, die auf den fehlerhaften Knoten 2 hinweist. Diese Wartungsnachricht bzw. dieser Wartungshinweise können über einen Netzwerk an einen entfernten Wartungsserver übertragen werden. Bei dem Netzwerk kann es sich um ein drahtgebundenes oder um ein drahtloses Netzwerk handeln.

Durch die kontinuierliche Aufzeichnung eines Bus-Protokoll-Fehlers ist es möglich, einen auftretenden Fehler bzw. einen auftretenden fehlerhaften Knoten 2 eindeutig zu identifizieren.

Das erfindungsgemäße Verfahren erlaubt eine frühzeitige Erkennung von Störquellen in dem Bussystem 1, ohne dass diese funktionell eingeschränkt oder ganz abgeschaltet werden müssen. Somit ist trotz eines sich ankündigenden Fehlers der weitere Betrieb des Bussystems 1 uneingeschränkt möglich. Darüber hinaus kann eine entsprechende Wartungsarbeit eingeplant und zielgerecht durchgeführt werden.

Aufgrund der frühzeitigen Erkennung von potentiell fehlerhaften Knoten kann in sicherheitskritischen Anwendungen die Anzahl der redundanten Knoten 2 vermindert werden. Ist das Bussystem in einem Fahrzeug eingebaut, verringert sich hierdurch das Gewicht des Fahrzeugs.

Durch das frühzeitige Erkennen eines fehlerbehafteten CAN-Busteilnehmers bzw. eines Knotens 2 und dessen frühzeitige Reparatur bzw. Auswechslung wird die Verfügbarkeit des Bussystems 1 erhöht. Geräteausfälle, welche durch ein Fehlverhalten eines Knotens 1 verursacht werden, können somit verhindert werden. Bei Fehlverhalten von Geräten werden mit Hilfe des erfindungsgemäßen Verfahrens Wartungsarbeiten erheblich vereinfacht und beschleunigt.

## Patentansprüche

1. Verfahren zum Erkennen eines fehlerhaften Knotens (2), der an einen Bus (3) eines Bussystems (1) angeschlossen ist, wobei ein Master-Knoten (4) mit dem Bus (3) verbunden ist,
wobei der Knoten (2) in einem normalen Betriebszustand bei Erkennung eines Fehlers einen internen Fehlerzähler (FZ) inkrementiert,
wobei der Knoten (2) in einen isolierten Betriebszustand schaltet, in welchem der Knoten (2) keine Nachrichten über den Bus (3) des Bussystems (1) austauscht, wenn der interne Fehlerzähler (FZ) des Knotens (2) einen vorgegebenen Fehler-Schwellenwert überschreitet,
wobei bei Erfüllung einer Bedingung der Knoten (2) von dem isolierten Betriebszustand in den normalen Betriebszustand schaltet und dieser Zustandswechsel erfasst wird, wobei ein zu dem Knoten (2) zugehöriger Zustandswechselzähler (ZWZ), der in dem Master-Knoten (4) vorgesehen ist, inkrementiert wird, wenn ein Zustandswechsel des Knotens (2) von dem isolierten Betriebszustand in den normalen Betriebszustand erfasst wird, und
wobei der Knoten (2) als fehlerhaft erkannt wird, wenn eine Rate der erfassten Zustandswechsel eine einstellbare Wechselrate oder eine Anzahl der erfassten Zustandswechsel einen einstellbaren ZustandswechselSchwellenwert überschreitet.

2. Verfahren nach Anspruch 1,
wobei ein Knoten (2) einen Zustandswechsel von dem isolierten Betriebszustand in den normalen Betriebszustand mittels einer über den Bus (3) gesendeten Nachricht oder über einen von dem Bus (3) getrennten Kommunikationskanal (5) dem Master-Knoten (4) anzeigt.

3. Verfahren nach Anspruch 1,
wobei der Knoten (2) bei Erkennung eines Fehlers bei der Übertragung einer Nachricht über den Bus (3) eine Fehlernachricht über den Bus (3) aussendet.

4. Knoten (2) für einen Bus (3) eines Bussystems (1), wobei der Knoten (2)
einen internen Fehlerzähler (FZ) aufweist, der in einem normalen Betriebszustand des Knotens (2) bei Erkennung eines Fehlers inkrementiert wird,
wobei der Knoten (2) von dem normalen Betriebszustand in einen isolierten Betriebszustand schaltet, wenn der interne Fehlerzähler (FZ) des Knotens (2) einen vorgegebenen Fehler-Schwellenwert überschreitet,
wobei bei Erfüllung einer Bedingung der Knoten (2) von dem isolierten Betriebszustand zurück in den normalen Betriebszustand schaltet,
wobei ein zu dem Knoten (2) zugehöriger Zustandswechselzähler (ZWZ) in einem über den Bus (3) mit dem Knoten (2) verbundenen Master-Knoten (4) vorgesehen ist, der bei jedem Zustandswechsel des Knotens (2) von dem isolierten Betriebszustand in den normalen Betriebszustand inkrementiert wird,
wobei der Knoten (2) als fehlerhaft erkannt wird, wenn der zugehörige Zustandswechselzähler (ZWZ) einen einstellbaren Zustandswechsel-Schwellenwert überschreitet.

5. Knoten nach Anspruch 4,
wobei ein Zustandswechsel des Knotens (2) von dem isolierten Betriebszustand in den normalen Betriebszustand mittels einer über den Bus (3) gesendeten Nachricht dem Masterknoten (4) angezeigt wird.

6. Knoten nach Anspruch 4,
wobei ein Zustandswechsel des Knotens (2) von dem isolierten Betriebszustand in den normalen Betriebszustand über einen getrennten Kommunikationskanal (5) dem Masterknoten (4) angezeigt wird.

7. Knoten nach einem der vorangehenden Ansprüche 4 bis 6,
wobei der Knoten (2) ein CAN-Knoten ist, der an einen CAN-Bus angeschlossen ist, der innerhalb eines Fahrzeugs vorgesehen ist.

8. Knoten nach Anspruch 7,
wobei das Fahrzeug ein Luftfahrzeug ist.

9. Computerprogrammprodukt mit Programmbefehlen zur Durchführung des Verfahrens nach Anspruch 1 bis 3.

10. Datenträger, der das Computerprogrammprodukt nach Anspruch 9 speichert.

## Claims

1. A method for detecting a defective node (2) that is connected to a bus (3) of a bus system (1), wherein a master node (4) is connected to the bus (3),
wherein in a normal operating state the node (2) increments an internal fault counter (FC) in the event of a fault being detected,
wherein the node (2) switches into an insulated operating state in which the node (2) does not exchange any messages by way of the bus (3) of the bus system (1) if the internal fault counter (FC) of the node (2) exceeds a predetermined fault threshold value,
wherein in the case of a condition being fulfilled the node (2) switches from the insulated operating state into the normal operating state and this state of change is recorded, wherein a state of change counter (SCC) that is associated with the node (2) and is provided in the master node (4) is incremented if a state of change of the node (2) from the insulated operating state into the normal operating state is detected, and
wherein the node (2) is recognized as being defective if a rate of the detected state of change exceeds an adjustable rate of change or a number of the detected rates of change exceeds an adjustable state of change threshold value.

2. The method as claimed in Claim 1,
wherein a node (2) indicates to the master node (4) a state of change from the insulated operating state into the normal operating state by means of a message that is transmitted by way of the bus (3) or by way of a communication channel (5) that is separate from the bus (3).

3. The method as claimed in Claim 1,
wherein the node (2) transmits an error message by way of the bus (3) upon detecting a fault when transmitting a message by way of the bus (3).

4. A node (2) for a bus (3) of a bus system (1), wherein the node (2)
comprises an internal fault counter (FC) that is incremented in a normal operating state of the node (2) upon detecting a fault,
wherein the node (2) switches from the normal operating state into an insulated operating state if the internal fault counter (FC) of the node (2) exceeds a predetermined fault threshold value,
wherein the node (2) switches from the insulated operating state back into the normal operating state upon fulfilling a condition,
wherein a state of change counter (SCC) that is associated with the node (2) is provided in a master node (4) that is connected to the node (2) by way of the bus (3) and is incremented in the case of each change of state of the node (2) from the insulated operating state into the normal operating state,
wherein the node (2) is recognized as being defective if the associated state of change counter (SCC) exceeds an adjustable state of change threshold value.

5. The node as claimed in Claim 4,
wherein a state of change of the node (2) from the insulated operating state into the normal operating state is indicated to the master node (4) by means of a message that is transmitted by way of the bus (3).

6. The node as claimed in Claim 4,
wherein a state of change of the node (2) from the insulated operating state into the normal operating state is indicated to the master node (4) by way of a separate communication channel (5).

7. The node as claimed in any one of the preceding claims 4 to 6, wherein the node (2) is a CAN node that is connected to a CAN bus that is provided within a vehicle.

8. The node as claimed in claim 7,
wherein the vehicle is an aircraft.

9. A computer program product having program commands for implementing the method as claimed in Claim 1 to 3.

10. A data carrier that stores the computer program product as claimed in Claim 9.

## Revendications

1. Procédé destiné à détecter un noeud défectueux (2) relié à un bus (3) d'un système de bus (1), dans lequel un noeud maître (4) est relié au bus (3),
dans lequel le noeud (2), dans un état de fonctionnement normal, incrémente un compteur d'erreurs interne (FZ) lors de la détection d'une erreur,
dans lequel le noeud (2) commute dans un état de fonctionnement isolé, dans lequel état le noeud (2) n'échange pas de messages par l'intermédiaire du bus (3) du système de bus (1) lorsque le compteur d'erreurs interne (FZ) du noeud (2) dépasse une valeur seuil d'erreurs prédéfinie,
dans lequel, lorsqu'une condition est remplie, le noeud (2) commute de l'état de fonctionnement isolé en l'état de fonctionnement normal et dans lequel ce changement d'état est enregistré, dans lequel un compteur de changements d'état (ZWZ) correspondant au noeud (2), ménagé dans le noeud maître (4), est incrémenté lorsqu'un changement d'état du noeud (2) de l'état de fonctionnement isolé en l'état de fonctionnement normal est enregistré, et
dans lequel le noeud (2) est détecté comme défectueux lorsqu'un taux des changements d'état enregistrés dépasse un taux de changements réglable ou lorsqu'un nombre des changements d'état enregistrés dépasse une valeur seuil réglable de changements d'état.

2. Procédé selon la revendication 1,
dans lequel un noeud (2) indique un changement d'état de l'état de fonctionnement isolé en l'état de fonctionnement normal au moyen d'un message émis par l'intermédiaire du bus (3) ou l'indique au noeud maître (4) par l'intermédiaire d'un canal de communication (5) séparé du bus (3).

3. Procédé selon la revendication 1,
dans lequel le noeud (2), lorsqu'une erreur est détectée lors de la transmission d'un message par l'intermédiaire du bus (3), émet un message d'erreur par l'intermédiaire du bus (3).

4. Noeud (2) pour un bus (3) d'un système de bus (1), dans lequel le noeud (2)
présente un compteur d'erreurs interne (FZ) qui, dans un état de fonctionnement normal du noeud (2), est incrémenté lorsqu'une erreur est détectée,
dans lequel le noeud (2) commute de l'état de fonctionnement normal en un état de fonctionnement isolé lorsque le compteur d'erreurs interne (FZ) du noeud (2) dépasse une valeur seuil d'erreurs prédéfinie,
dans lequel, lorsqu'une condition est remplie, le noeud (2) commute en retour de l'état de fonctionnement isolé en l'état de fonctionnement normal,
dans lequel un compteur de changements d'état (ZWZ) correspondant au noeud (2) est ménagé dans un noeud maître (4) relié au noeud (2) par l'intermédiaire du bus (3), lequel compteur de changements d'état est incrémenté lors de chaque changement d'état du noeud (2) de l'état de fonctionnement isolé en l'état de fonctionnement normal, dans lequel le noeud (2) est détecté comme défectueux lorsque le compteur de changements d'état correspondant (ZWZ) dépasse une valeur seuil réglable de changements d'état.

5. Noeud selon la revendication 4,
dans lequel un changement d'état du noeud (2) de l'état de fonctionnement isolé en l'état de fonctionnement normal est indiqué au noeud maître (4) au moyen d'un message émis par l'intermédiaire du bus (3).

6. Noeud selon la revendication 4,
dans lequel un changement d'état du noeud (2) de l'état de fonctionnement isolé en l'état de fonctionnement normal est indiqué au noeud maître (4) par l'intermédiaire d'un canal de communication séparé (5).

7. Noeud selon l'une quelconque des revendications précédentes 4 à 6, dans lequel le noeud (2) est un noeud CAN relié à un bus CAN qui est ménagé à l'intérieur d'un véhicule.

8. Noeud selon la revendication 7,
dans lequel le véhicule est un véhicule aérien.

9. Produit de programme d'ordinateur comportant des instructions de programme pour la réalisation du procédé selon les revendications 1 à 3.

10. Support de données qui mémorise le produit de programme d'ordinateur selon la revendication 9.
